# FASCICULE DE BREVET EUROPEEN

(11) **EP 1 766 262 B1**
(45) Date de publication et mention de la délivrance du brevet: **10.08.2016**
(21) Numéro de dépôt: 05781866.8
(22) Date de dépôt: 27.06.2005
(51) Int. Cl.: F16F 13/10

(54) **SUPPORT ANTI-VIBRATION HYDRAULIQUE**
HYDRAULISCHES SCHWINGUNGSDÄMPFENDES LAGER
HYDRAULIC ANTI-VIBRATION SUPPORT

(30) Priorité: 05.07.2004 FR 0407442
(43) Date de publication de la demande: 28.03.2007
(73) Titulaire: Renault SAS, 92100 Boulogne Billancourt (FR)
(72) Inventeur: DEMONGIN, Eric, F-78650 BEYNES (FR)
(86) Numéro de dépôt international: PCT/FR2005/050496
(87) Numéro de publication internationale: WO 2006/013299

(56) Documents cités:
- EP-A- 1 067 309
- EP-A- 1 336 771
- FR-A- 2 702 021
- FR-A- 2 796 114
- PATENT ABSTRACTS OF JAPAN vol. 1997, no. 01, 31 janvier 1997 (1997-01-31) & JP 08 247208 A (BRIDGESTONE CORP), 24 septembre 1996 (1996-09-24)

## Description

L'invention concerne un support anti-vibratoire hydraulique. De tels supports sont, en particulier, utilisés dans l'industrie automobile, pour réaliser un support hydraulique assurant la liaison entre le Groupe Motopropulseur d'un véhicule automobile et la caisse.

Plus particulièrement, l'invention concerne un support anti-vibratoire hydraulique destiné à être interposé aux fins d'amortissement et de liaison entre deux éléments rigides, ce support comportant :
- deux armatures destinées à être reliées respectivement aux deux éléments rigides à réunir,
- un élément de liaison reliant entre elles les deux armatures,
- une chambre de travail remplie de liquide et délimitée par l'élément de liaison,
- au moins une chambre de compensation remplie de liquide et délimitée par une paroi souple,
- un canal rempli de liquide qui fait communiquer la chambre de travail avec la chambre de compensation,
- un système de découplage.

Dans l'art antérieur tel que le document FR2825128, les supports anti-vibratoires comportent deux armatures rigides métalliques. De tels supports engendrent une masse importante qui est source de dégradation acoustique. Ces supports ont également l'inconvénient de présenter un encombrement important et d'être en porte à faux.

La publication EP1067309-A1 divulgue un support anti-vibratoire hydroélastique pour la suspension d'un groupe motopropulseur sur une caisse de véhicule automobile. Ledit support comprend une chambre de travail et une chambre d'expansion disposée l'une au-dessus de l'autre et reliée entre elles par un canal sensiblement vertical dont la hauteur et la longueur sont ajustées pour obtenir un amortissement maximal à une fréquence déterminée. Ledit support peut alors présenter un encombrement important.

Afin de pallier ces inconvénients, l'invention a pour objet de compacter, d'alléger, d'équilibrer le support anti-vibration. L'invention a également pour objet de filtrer les remontées acoustiques du moteur.

A cet effet, l'invention propose un support anti-vibratoire du type cité ci-dessus, caractérisé en ce que le canal, la chambre de compensation, la deuxième armature sont parties intégrantes du support anti-vibratoire.

Selon d'autres caractéristiques de l'invention, le corps comporte le système de découplage.

Selon d'autres caractéristiques de l'invention, la paroi souple de la chambre de compensation est liée de façon étanche sur un couvercle qui recouvre partiellement le corps.

Selon d'autres caractéristiques de l'invention, le support anti-vibratoire hydraulique comporte un capot limiteur.

Selon d'autres caractéristiques de l'invention, le corps est en matière composite.

Selon d'autres caractéristiques de l'invention, le procédé de fabrication d'un support anti-vibratoire hydraulique comprend les étapes suivantes :
- l'élément de liaison et la première armature sont assemblés,
- le corps est surmoulé sur l'ensemble élément de liaison - première armature au niveau de la base de l'élément de liaison,
- la paroi souple est surmoulée sur le couvercle,
- l'ensemble couvercle - paroi souple est positionné sur le corps pour être assemblé.

Selon d'autres caractéristiques de l'invention, le procédé de fabrication est caractérisé en ce que le clapet peut être ajouté indépendamment du corps et de l'élément de liaison ou surmoulé sur le couvercle ou surmoulé sur l'élément de liaison.

Selon d'autres caractéristiques de l'invention, le procédé de fabrication est caractérisé en ce que l'ensemble couvercle - paroi souple est positionné sur le corps et soudé par ultrasons.

D'autres caractéristiques et avantages de l'invention apparaîtront à la lecture de la description d'exemples de réalisation en référence aux dessins annexés dans lesquels :
La figure 1 est une vue en coupe verticale du support anti-vibratoire selon l'invention.
La figure 2 est une vue en section selon l'axe II-II de la figure 1 selon l'invention.

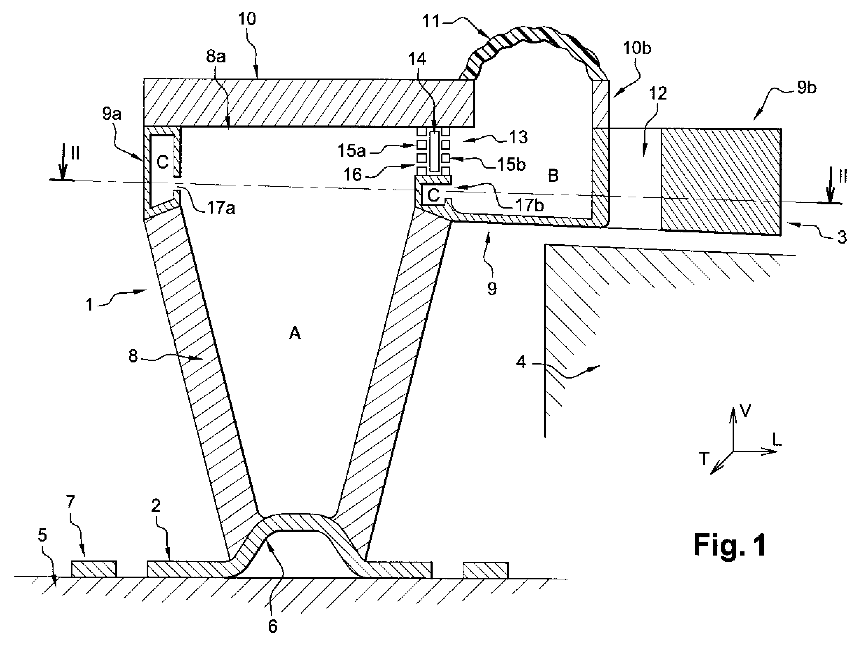

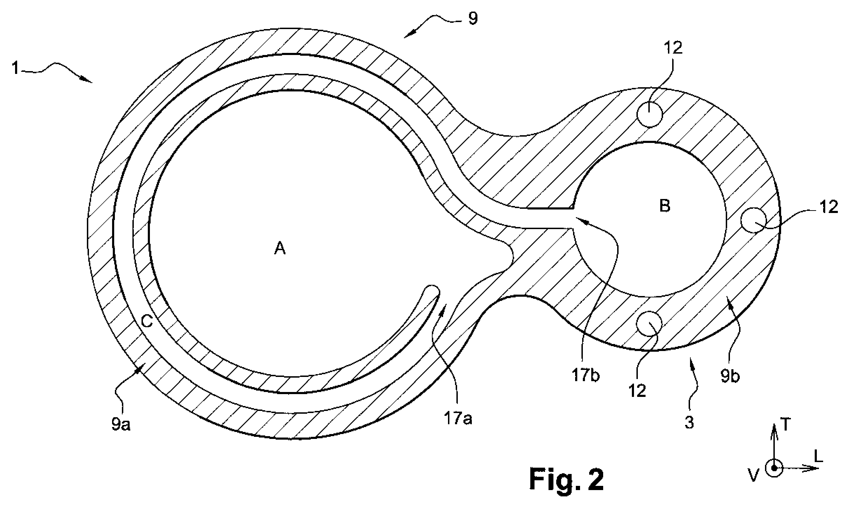

Dans la description qui suit, nous prendrons à titre non limitatif une orientation longitudinale, vertical et transversale indiquée par le trièdre L,V,T des figures 1 et 2.

Des éléments identiques ou analogues sont désignés par les mêmes chiffres de référence.

Tel que représenté à la figure 1, le support anti-vibratoire hydraulique 1 comporte un élément de liaison 8 reliant une armature 3 appartenant à un corps 9 et une armature 2.

Les deux armatures 2,3 sont destinées à être fixées, par exemple, respectivement à la caisse 5 et au bloc motopropulseur 4 d'un véhicule. Ces deux armatures 2,3 se situent dans un même plan perpendiculaire à l'axe vertical.

La première armature 2 métallique est de forme globalement plane. Ses extrémités 7 permettent de fixer le support anti-vibratoire à la caisse. Cette première armature 2 présente un embouti 6 central selon l'axe vertical.

L'élément de liaison 8 qui est de forme tronconique et qui est évidé, relie la première armature 2 à la deuxième armature 3 par tout moyen connu en soi tels que l'encollage ou l'accrochage mécanique. L'élément de liaison 8 s'étend en s'évasant vers le haut depuis l'embouti 6 jusqu'à sa base 8a. L'élément de liaison 8 comporte dans sa partie évidée une chambre de travail A remplie de liquide.

Tel que représenté sur la figure 2, la deuxième armature 3 est intégrée dans un corps 9, par exemple par un surmoulage, au niveau de la base 8a de l'élément de liaison 8. Le corps 9 recouvre la base 8a de l'élément de liaison 8. Ce recouvrement constitue la partie 9a. Le prolongement de la chambre A dans la partie supérieure de l'élément de liaison 8, au niveau de la base 8a, est partie intégrante du corps 9. Le corps 9 s'étend à la périphérie de l'élément de liaison 8 dans le plan perpendiculaire à l'axe vertical, ce plan passant par la partie 9a. Cette extension est appelée partie 9b. Le corps 9 est choisi dans une matière composite de façon à alléger la masse du support anti-vibratoire 1. Les matières composites peuvent être choisies, par exemple, parmi les polyamides aromatiques - élastomères chargés de fibres, les fibres carbones tissées.

La partie 9b s'étendant à la périphérie de l'élément de liaison 8 comporte trois orifices 12 qui permettent le passage de vis destinées à solidariser le corps 9 au groupe motopropulseur 4.

La partie 9a recouvrant la base 8a de l'élément de liaison 8 comporte un canal circulaire C.

La surface du corps 9 est principalement recouverte par un couvercle 10 qui peut être soudé par ultrasons. La partie 9a est totalement recouverte par la partie 10a du couvercle 10. La partie 9b est partiellement recouverte par la partie 10b du couvercle 10. Seuls les orifices 12 ne sont pas recouverts par le couvercle 10.

Le couvercle 10 comporte une paroi souple, appelée soufflet 11, qui est située sur la partie 10b s'étendant à la périphérie de la base 8a de l'élément de liaison 8. Le soufflet 11 est relié de façon étanche au couvercle 10 par un surmoulage de façon à délimiter avec une portion du corps 9 une chambre de compensation étanche B remplie de liquide.

La chambre de travail A et la chambre de compensation B sont reliées entre elles de façon permanente par un système de découplage 13 et le canal circulaire C situé à la jonction entre les deux parties 9a, 9b du corps 9. Le canal C débouche sur chacune des chambres A,B par un passage étranglé 17a, 17b.

Le système de découplage 13 comporte un clapet 14 et deux grilles 15a, 15b sensiblement parallèles à l'axe vertical. Les grilles 15a,15b peuvent être partie intégrante du couvercle 10. Le clapet 14 peut être rapporté à l'élément de liaison 8 et au corps 9 ou surmoulé sur l'élément de liaison 8 ou surmoulé sur le couvercle 10. Le clapet 14 est monté avec un faible jeu entre les deux grilles 15a,15b. Le clapet 14 est disposé de telle façon qu'il peut passer d'une position de repos à une position d'obturation de grille 15a,15b. La grille 15a communique avec la chambre de travail A et la grille 15b communique avec la chambre de compensation B.

Le système de découplage 13 est particulièrement efficace pour absorber les vibrations supérieures à 20 Hz et de faible amplitude (par exemple inférieure à 1 mm). Le clapet 14 est dans une position de repos. Le liquide peut passer par les ouvertures 16 de grille 15a,15b pour passer d'une chambre à l'autre.

Le canal C permet des transferts de liquide entre les deux chambres A et B au moyen des passages 17a,17b. De cette façon, lorsque les mouvements vibratoires sont de fréquence par exemple inférieure à 20 Hz et de haute amplitude (par exemple supérieure à 1 mm), ils se traduisent par des transferts de liquide entre les chambres A et B par l'intermédiaire du canal C et des passages 17a,17b. Le clapet 14 est dans une position d'obturation de grille, le clapet 14 est alors plaqué contre l'une des grilles 15a,15b.

Selon un autre mode de réalisation, la première armature 2 peut être reliée au groupe motopropulseur 4 et la deuxième armature 3, à la caisse 5. Le support anti-vibratoire 1 est donc dans une position inversée.

Selon un autre mode de réalisation, la chambre de compensation B peut être au dessus de la chambre de travail A. Une cloison rigide délimite alors les deux chambres A,B. Cette cloison rigide peut comporter un ou plusieurs canaux ainsi qu'un système de découplage.

Selon un autre mode de réalisation, le support anti-vibratoire 1 peut être recouvert par un capot limiteur (non représenté) qui est fixé à la première armature 2.

Lors du procédé de fabrication, l'élément de liaison 8 et la première armature 2 sont assemblés, par exemple, par adhérisation. Selon les caractéristiques physiques et chimiques l'ensemble élément de liaison 8 - première armature 2 est surmoulé sur le corps 9 ou inversement. Le clapet 14 peut être ajouté indépendamment du corps et de l'élément de liaison ou surmoulé sur le couvercle 10 ou surmoulé sur l'élément de liaison 8. Une fois moulé, la paroi souple 11 est surmoulée sur le couvercle 10. L'ensemble couvercle 10 - paroi souple 11 est positionné sur le corps 9 et soudé par ultrasons.
Selon les caractéristiques physico-chimiques des matériaux utilisés, l'ordre des étapes de surmoulage du procédé pourra être modifié.

## Revendications

1. Support anti-vibratoire hydraulique (1) destiné à être interposé aux fins d'amortissement et de liaison entre deux éléments rigides (4,5), ce support (1) comportant :
- deux armatures (2,3) destinées à être reliées respectivement aux deux éléments (4,5) rigides à réunir,
- un élément de liaison (8) reliant entre elles les deux armatures (2,3),
- une chambre de travail (A) remplie de liquide et délimitée par l'élément de liaison (8),
- au moins une chambre de compensation (B) remplie de liquide et délimitée par une paroi souple (11),
- un canal (C) rempli de liquide qui fait communiquer la chambre de travail (A) avec la chambre de compensation (B),
- un système de découplage (13),
**caractérisé en ce qu'**un corps (9) comporte au moins le canal (C) rempli de liquide, la chambre de compensation (B), le système de découplage (13) et la deuxième armature (3), la chambre de travail (A) et la chambre de compensation (B) étant reliées entre elles de façon permanente par le système de découplage (13) et ledit canal (C) rempli de liquide.

2. Support anti-vibratoire hydraulique (1) selon la revendication 1, **caractérisé en ce que** ledit canal (C) rempli de liquide est de forme circulaire.

3. Support anti-vibratoire hydraulique (1) selon l'une des revendications précédentes **caractérisé en ce que** la paroi souple (11) de la chambre de compensation (B) est liée de façon étanche sur un couvercle (10) qui recouvre partiellement le corps (9).

4. Support anti-vibratoire hydraulique (1) selon l'une des revendications précédentes **caractérisé en ce que** le support anti-vibratoire hydraulique (1) comporte un capot limiteur.

5. Support anti-vibratoire hydraulique (1) selon l'une des revendications précédentes **caractérisé en ce que** le corps (9) est en matière composite.

6. Procédé de fabrication d'un support anti-vibratoire hydraulique (1) selon l'une des revendications précédentes comprenant les étapes suivantes :
- l'élément de liaison (8) et la première armature (2) sont assemblés,
- le corps (9) est surmoulé sur l'ensemble élément de liaison (8) - première armature (2) au niveau de la base (8a) de l'élément de liaison (8),
- la paroi souple (11) est surmoulée sur le couvercle (10),
- l'ensemble couvercle (10) - paroi souple (11) est positionné sur le corps (9) pour être assemblé.

7. Procédé de fabrication d'un support anti-vibratoire hydraulique (1) selon la revendication 6, **caractérisé en ce qu'**un clapet (14) est ajouté indépendamment du corps (9) et de l'élément de liaison (8) ou surmoulé sur le couvercle (10) ou surmoulé sur l'élément de liaison (8).

8. Procédé de fabrication d'un support anti-vibratoire hydraulique (1) selon la revendication 6, **caractérisé en ce que** l'ensemble couvercle (10) - paroi souple (11) est positionné sur le corps (9) et soudé par ultrasons.

## Patentansprüche

1. Hydraulischer schwingungsdämpfender Träger (1), der dazu bestimmt ist, zum Zweck der Dämpfung und Verbindung zwischen zwei starren Elementen (4, 5) eingefügt zu werden, wobei dieser Träger (1) Folgendes aufweist:
- zwei Gestelle (2, 3), die dazu bestimmt sind, jeweils mit den zwei zu vereinigenden starren Elementen (4, 5) verbunden zu werden,
- ein Verbindungselement (8), das die zwei Gestelle (2, 3) miteinander verbindet,
- eine Arbeitskammer (A), die mit Flüssigkeit gefüllt ist und durch das Verbindungselement (8) begrenzt ist,
- mindestens eine Ausgleichskammer (B), die mit Flüssigkeit gefüllt ist und durch eine flexible Wand (11) begrenzt ist,
- einen mit Flüssigkeit gefüllten Kanal (C), der die Arbeitskammer (A) mit der Ausgleichskammer (B) verbindet,
- ein Entkopplungssystem (13),
**dadurch gekennzeichnet, dass** ein Körper (9) mindestens den mit Flüssigkeit gefüllten Kanal (C), die Ausgleichskammer (B), das Entkopplungssystem (13) und das zweite Gestell (3) aufweist, wobei die Arbeitskammer (A) und die Ausgleichskammer (B) durch das Entkopplungssystem (13) und den mit Flüssigkeit gefüllten Kanal (C) permanent miteinander verbunden sind.

2. Hydraulischer schwingungsdämpfender Träger (1) nach Anspruch 1, **dadurch gekennzeichnet, dass** der mit Flüssigkeit gefüllte Kanal (C) eine kreisrunde Form besitzt.

3. Hydraulischer schwingungsdämpfender Träger (1) nach einem der vorhergehenden Ansprüche, **dadurch gekennzeichnet, dass** die flexible Wand (11) der Ausgleichskammer (B) dicht an einen Deckel (10), der den Körper (9) teilweise bedeckt, gebunden ist.

4. Hydraulischer schwingungsdämpfender Träger (1) nach einem der vorhergehenden Ansprüche, **dadurch gekennzeichnet, dass** der hydraulische schwingungsdämpfende Träger (1) eine begrenzende Abdeckung aufweist.

5. Hydraulischer schwingungsdämpfender Träger (1) nach einem der vorhergehenden Ansprüche, **dadurch gekennzeichnet, dass** der Körper (9) aus Verbundmaterial ist.

6. Verfahren zur Herstellung eines hydraulischen schwingungsdämpfenden Trägers (1) nach einem der vorhergehenden Ansprüche, umfassend die folgenden Schritte:
- das Verbindungselement (8) und das erste Gestell (2) werden zusammengebaut,
- der Körper (9) wird auf die Baugruppe Verbindungselement (8) - erstes Gestell (2) im Bereich der Basis (8a) des Verbindungselements (8) aufgeformt,
- die flexible Wand (11) wird auf den Deckel (10) aufgeformt,
- die Baugruppe Deckel (10) - flexible Wand (11) wird am Körper (9) positioniert, um zusammengebaut zu werden.

7. Verfahren zur Herstellung eines hydraulischen schwingungsdämpfenden Trägers (1) nach Anspruch 6, **dadurch gekennzeichnet, dass** eine Klappe (14) unabhängig vom Körper (9) und vom Verbindungselement (8) hinzugefügt oder am Deckel (10) aufgeformt oder am Verbindungselement (8) aufgeformt wird.

8. Verfahren zur Herstellung eines hydraulischen schwingungsdämpfenden Trägers (1) nach Anspruch 6, **dadurch gekennzeichnet, dass** die Baugruppe Deckel (10) - flexible Wand (11) am Körper (9) positioniert und ultraschallgeschweißt wird.

## Claims

1. Hydraulic anti-vibration mounting (1) intended to be interposed for damping and link purposes between two rigid elements (4, 5), this mounting (1) comprising:
- two reinforcements (2, 3) intended to be linked respectively to the two rigid elements (4, 5) to be joined,
- a link element (8) linking the two reinforcements (2, 3) together,
- a working chamber (A) filled with liquid and delimited by the link element (8),
- at least one compensation chamber (B) filled with liquid and delimited by a flexible wall (11),
- a channel (C) filled with liquid which connects the working chamber (A) with the compensation chamber (B),
- a decoupling system (13),
**characterized in that** a body (9) comprises at least the channel (C) filled with liquid, the compensation chamber (B), the decoupling system (13) and the second reinforcement (3), the working chamber (A) and the compensation chamber (B) being linked together permanently by the decoupling system (13) and said channel (C) filled with liquid.

2. Hydraulic anti-vibration mounting (1) according to Claim 1, **characterized in that** said channel (C) filled with liquid is circular.

3. Hydraulic anti-vibration mounting (1) according to one of the preceding claims, **characterized in that** the flexible wall (11) of the compensation chamber (B) is linked in a seal-tight manner to a cover (10) which partially covers the body (9).

4. Hydraulic anti-vibration mounting (1) according to one of the preceding claims, **characterized in that** the hydraulic anti-vibration mounting (1) comprises a limiting cap.

5. Hydraulic anti-vibration mounting (1) according to one of the preceding claims, **characterized in that** the body (9) is made of composite material.

6. Method for manufacturing a hydraulic anti-vibration mounting (1) according to one of the preceding claims, comprising the following steps:
- the link element (8) and the first reinforcement (2) are assembled,
- the body (9) is overmoulded on the link element (8) - first reinforcement (2) assembly at the level of the base (8a) of the link element (8),
- the flexible wall (11) is overmoulded on the cover (10),
- the cover (10) - flexible wall (11) assembly is positioned on the body (9) to be assembled.

7. Method for manufacturing a hydraulic anti-vibration mounting (1) according to Claim 6, **characterized in that** a check valve (14) is added independently of the body (9) and of the link element (8) or overmoulded on the cover (10) or overmoulded on the link element (8).

8. Method for manufacturing a hydraulic anti-vibration mounting (1) according to Claim 6, **characterized in that** the cover (10) - flexible wall (11) assembly is positioned on the body (9) and welded by ultrasound.
